# EUROPEAN PATENT APPLICATION

(11) **EP 4 620 920 A1**
(43) Date of publication of application: **24.09.2025**
(21) Application number: 25160765.1
(22) Date of filing: 27.02.2025
(51) Int. Cl.: C01G 53/50, H01M 4/525

(54) **POSITIVE ELECTRODE ACTIVE MATERIALS, POSITIVE ELECTRODES AND RECHARGEABLE LITHIUM BATTERIES**

(30) Priority: 27.02.2024 KR 20240028309
(71) Applicant: SAMSUNG SDI CO., LTD., Yongin-si, Gyeonggi-do 17084 (KR)
(72) Inventor: KIM, Young-Ki, 17084 Yongin-si (KR); KONG, Youngsun, 17084 Yongin-si (KR); CHOO, Sung Ho, 17084 Yongin-si (KR); KANG, Seok Mun, 17084 Yongin-si (KR); KANG, Byungwuk, 17084 Yongin-si (KR); YOON, Jaesang, 17084 Yongin-si (KR); JUN, Dowook, 17084 Yongin-si (KR); JEONG, Jaeyong, 17084 Yongin-si (KR); DOO, Sungwook, 17084 Yongin-si (KR); KANG, Gwiwoon, 17084 Yongin-si (KR)
(74) Representative: Marks & Clerk LLP

(57) **Abstract**

A positive electrode active material for rechargeable lithium batteries includes (a) core particles, including a layered lithium nickel-manganese-based composite oxide, which are in a form of secondary particles, wherein the secondary particles are each an agglomeration of a plurality of primary particles; (b) an aluminium coating layer on a surface of the core particles; and (c) a grain boundary coating portion, which is located on the surface of the primary particles, and which includes cobalt. Also disclosed is a positive electrode including the positive electrode active material, and a rechargeable lithium battery including the positive electrode.

## Description

### BACKGROUND

### 1. Field

One or more embodiments of the present disclosure relate to positive electrode active materials, positive electrodes including the positive electrode active materials, and rechargeable lithium batteries including the positive electrodes.

### 2. Description of the Related Art

It is known that a portable information device such as a cell phone, a laptop, a smart phone, and/or the like, and/or an electric vehicle, use a rechargeable lithium battery having relatively high energy density and easy portability as a driving power source. Recently, research has been conducted to use a rechargeable lithium battery with high energy density as a driving power source for hybrid or electric vehicles, or a power storage power source for an energy storage system (ESS) or a power wall.

Various positive electrode active materials have been investigated to achieve rechargeable lithium batteries for applications to such uses. Among them, lithium nickel-based oxide, lithium nickel-manganese-cobalt-based composite oxide, lithium nickel-cobalt-aluminium-based composite oxide, and/or lithium cobalt-based oxide are mainly used as positive electrode active materials. However, while the demand for large-sized, high-capacity, and/or high-energy-density rechargeable lithium batteries has recently increased, the supply of a positive electrode active material containing cobalt, a rare metal, is expected to be severely short. For example, because cobalt is expensive and there are not many remaining reserves, there are needs for developing positive electrode active materials that exclude cobalt or reduce a cobalt content (e.g., substantially reduce its amount) in the positive electrode active materials. That is, active development is underway for lithium-based positive electrode active materials due to their ability to attain relatively high capacity and energy density. However, given the high cost of cobalt and its limited reserves, there is a desire to explore the development of positive electrode active materials that either eliminate the use of cobalt or significantly decrease its presence within these materials.

### SUMMARY

One or more aspects of the present invention seeks to provide a positive electrode active material that may achieve high density, high capacity, and long cycle-life characteristics and reduce an amount of high-temperature storage gas generated, as well as a positive electrode and a rechargeable lithium battery using the positive electrode active material .

Additional aspects will be set forth in part in the description which follows and, in part, will be apparent from the description, or may be learned by practice of the presented embodiments.

In a first aspect the present invention provides a positive electrode active material that includes core particles including a lithium nickel-manganese-based composite oxide and which are in a form of secondary particles, wherein the secondary particles are each an agglomeration of a plurality of primary particles (e.g., are in the form of secondary particles, in each which a plurality of primary particles are agglomerated), an aluminium coating layer on a surface of the core particles, and a grain boundary coating portion that is located on a surface of the primary particles, said grain boundary coating portion including cobalt.

In a second aspect, the present invention provides a method of preparing a positive electrode active material that includes the steps of: (i) preparing core particles including a lithium nickel-manganese-based composite oxide and which are in a form of secondary particles, wherein the secondary particles are formed (e.g., composed) by agglomerating a plurality of primary particles (e.g., are in the form of secondary particles, in each which a plurality of primary particles are agglomerated), (ii) preparing an aluminium coating solution including an aqueous solvent and an aluminium raw material, (iii) adding the core particles to the aluminium coating solution, mixing them, and then drying them to prepare a coated product, and (iv) dry-mixing the coated product and the cobalt raw material and performing heat treatment to obtain a positive electrode active material.

In a third aspect the present invention provides a rechargeable lithium battery that includes the aforementioned positive electrode, a negative electrode, and an electrolyte.

A positive electrode active material according to one or more embodiments of the present disclosure may achieve high density, high capacity, and long cycle-life characteristics, and further reduce the amount of high-temperature storage gas generated.

At least some of the above and other features of the invention are set out in the claims.

### BRIEF DESCRIPTION OF THE DRAWINGS

The above and other aspects, features, and advantages of certain embodiments of the present disclosure will be more apparent from the following description taken in conjunction with the accompanying drawings.
FIGS. 1 to 4 are each a view showing a rechargeable lithium battery according to one or more embodiments of the present disclosure.
FIGS. 5 and 6 are each a scanning electron microscopy-energy dispersive X-ray spectroscopy (SEM-EDS) image of the cross-section of the positive electrode active material prepared in Example 1.
FIG. 7 is a SEM-EDS analysis image of mapping cobalt elements on the positive electrode active material cross-section of Example 1.

### DETAILED DESCRIPTION

Hereinafter, example embodiments will be described in more detail so that those of ordinary skill in the art may easily implement them. However, the present disclosure may be embodied in many different forms and is not construed as limited to the example embodiments set forth herein.

The terminology used herein is used to describe embodiments only, and is not intended to limit the present disclosure. As used herein, the singular forms "a", "an", and "the" are intended to include the plural forms as well, unless the context clearly indicates otherwise. Further, the utilization of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Herein, it should be understood that terms such as "comprise(s)/comprising", "include(s)/including", or "have(has)/having" are intended to designate the presence of an embodied aspect, number, step (e.g., act or task), element, and/or a (e.g., any suitable) combination thereof, but it does not preclude the possibility of the presence or addition of one or more other features, numbers, steps (e.g., acts or tasks) , elements, and/or a (e.g., any suitable) combination thereof.

In the drawings, the thickness of layers, films, panels, regions, and/or the like, are exaggerated for clarity and like reference numerals designate like elements throughout the present disclosure, and duplicative descriptions thereof may not be provided for conciseness. It will be understood that if (e.g., when) an element such as a layer, film, region, or substrate is referred to as being "on" another element, it may be directly on the other element or intervening elements may also be present therebetween. In contrast, if (e.g., when) an element is referred to as being "directly on" another element, there are no intervening elements present.

In addition, "layer" as used herein may include not only a shape or a layer formed on the whole surface if (e.g., when) viewed from a plan view, but also a shape or a layer formed on a partial surface.

In one or more embodiments, an average particle diameter may be measured by a method well suitable to those skilled in the art, for example, by a particle size analyzer, for example, HORIBA, LA-950 laser particle size analyzer, or by a transmission electron microscope (TEM) or a scanning electron microscope (SEM). In one or more embodiments, an average particle diameter value may be obtained by measuring it using a dynamic light scattering method, performing data analysis, counting the number of particles for each particle size range, and calculating from this. Unless otherwise defined, the average particle diameter (D₅₀) may refer to a diameter of particles having a cumulative volume of 50 volume% in a particle size distribution. D₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In one or more embodiments, as used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of about 20 particles at random in a scanning electron microscope image. In the present disclosure, when particles are spherical, "diameter" indicates an average particle diameter, and when the particles are non-spherical, the "diameter" indicates a major axis length.

Herein, "or" is not to be construed as an exclusive meaning, for example, "A or B" is construed to include A, B, A+B, and/or the like. Further, as utilized herein, the term "and/or" includes any and all combinations of one or more of the associated listed items. Expressions such as "at least one of", "one of", and "selected from", when preceding a list of elements, modify the entire list of elements and do not modify the individual elements of the list. For example, "at least one of a, b and c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As used herein, the term "metal" is interpreted as a concept including ordinary metals, transition metals and metalloids (semi-metals). And the term "Group" as utilized herein refers to a group of the Periodic Table of Elements according to the 1 to 18 grouping system of the International Union of Pure and Applied Chemistry ("IUPAC").

### Positive Electrode Active Material

According to a first aspect of the invention there is provided a positive electrode active material including core particles that include a lithium nickel-manganese-based composite oxide and which are in a form of secondary particles, wherein the secondary particles are formed (e.g., are composed) by agglomerating a plurality of primary particles (e.g., are in the form of secondary particles, in each which a plurality of primary particles are agglomerated), an aluminium coating layer on a surface of the core particles, and a grain boundary coating portion that is located on a surface of the primary particles and that includes cobalt.

As the price of cobalt, a rare metal, has recently risen sharply, there is a demand for the development of positive electrode active materials that exclude cobalt or reduce a cobalt content (e.g., amount). Among the positive electrode active materials that exclude cobalt or reduce (e.g., substantially reduce) the cobalt content, a positive electrode active material having an olivine crystal structure, such as lithium iron phosphate (LFP), lithium manganese phosphate (LMP), lithium manganese iron phosphate (LMFP), and/or the like, or a spinel crystal structure, such as lithium manganese oxide (LMO), and/or the like, are limited in their ability to achieve high capacity due to a small available lithium amount within the structure (e.g., the olivine crystal structure and the spinel crystal structure). A layered lithium nickel-manganese-based positive electrode active material has excellent or suitable capacity and efficiency characteristics due to the high available lithium amount in the structure, making it suitable as a material for high-capacity batteries. However, when cobalt, which plays a key role in the layered structure, is removed, structural stability of the layered structure decreases, resistance of the layered structure increases, and it becomes difficult to secure long cycle-life characteristics. In addition, the layered lithium nickel-manganese-based positive electrode active material, from which cobalt is excluded, may have a problem of accelerated side reaction with an electrolyte under high-voltage and/or high-temperature conditions. As a result, the positive electrode active material that excludes cobalt may have characteristics of increasing gas generation and deteriorating cycle-life.

Accordingly, in a second aspect of the present invention there is provided a method of introducing an aluminium coating layer onto the surface of core particles that include (e.g., contain) a layered lithium nickel-manganese-based composite oxide, and introducing a grain boundary coating portion that contains cobalt and is located on the surface of the primary particles forming (e.g., that form or to form) the core particles in the form of secondary particles to strengthen the particle surface and concurrently (e.g., simultaneously) to form a robust internal structure, thereby improving initial charging and discharging efficiency and a gas generation amount at the high-temperature storage, as well as high-voltage and high-temperature cycle-life characteristics. That is, the present invention provides a method of applying an aluminium coating to the surface of (e.g., each of the) core particles. These particles include (e.g., are formed with) a layered lithium nickel-manganese-based composite oxide. The method also involves adding a cobalt-containing grain boundary coating to the surface of the primary particles. These primary particles constitute the core particles as secondary particles, and the coating enhance the surface strength to thus form a durable internal structure. Consequently, it boosts the efficiency of initial charge and discharge cycles, minimizes or reduces gas production during high-temperature storage, and betters the characteristics of high-voltage and high-temperature cycle life.

### Core Particles

The core particles include a layered lithium nickel-manganese-based composite oxide.

In the layered lithium nickel-manganese-based composite oxide, a nickel content (e.g., amount) may be greater than or equal to about 60 mol%, for example about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on 100 mol% of a total metal excluding lithium. In one embodiment, when the nickel content (e.g., amount) satisfies the above range, high capacity may be achieved and structural stability may be increased even if the cobalt content (e.g., amount) is reduced.

A manganese content (e.g., amount) may be greater than or equal to about 15 mol%, for example about 15 mol% to about 40 mol%, about 15 mol% to about 35 mol%, about 15 mol% to about 30 mol%, or about 20 mol% to about 30 mol% based on 100 mol% of a total metal excluding lithium in the layered lithium nickel-manganese-based composite oxide. In one embodiment, when the manganese content (e.g., amount) satisfies the above ranges, the positive electrode active material may improve structural stability while achieving high capacity.

The layered lithium nickel-manganese-based composite oxide may be a lithium nickel-manganese-aluminium-based composite oxide that further includes aluminium in addition to nickel and manganese. When the layered lithium nickel-manganese-based composite oxide contains aluminium, it is advantageous to maintain a stable layered structure even if the cobalt element is excluded from the structure. That is, when the layered lithium nickel-manganese-based composite oxide includes aluminium, it can be beneficial to preserve a stable layered configuration, even in the absence of cobalt from its structure. An aluminium content (e.g., amount) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1.5 mol% to about 2.5 mol% based on 100 mol% of a total metal excluding lithium in the lithium nickel-manganese-aluminium-based composite oxide. As used herein, the term "aluminium content" (e.g., amount) refers to a content (e.g., amount) of aluminium present in the core particles. In one embodiment, when the aluminium content (e.g., amount) satisfies the above ranges, a stable layered structure may be maintained even if cobalt is excluded from the core particles, the problem of structure collapse due to charging and discharging may be suppressed or reduced, and long cycle-life characteristics of the positive electrode active material may be achieved.

According to one or more embodiments of the present disclosure, a concentration of aluminium in the core particles may be substantially uniform. For example, this means that there is no (e.g., substantially no) concentration gradient of aluminium from a centre of each of the core particles to the surface of the core particle within the core particles, and/or an aluminium concentration on the outside of each of the core particles is neither higher nor lower than on the inside, and that the aluminium within each of the core particles is evenly distributed. This structure may be obtained by synthesizing a composite oxide using nickel-manganese-aluminium-based hydroxide as a precursor. For example, the uniform concentration of aluminium in the core particles may be achieved by using aluminium raw materials during the precursor production, instead of additionally doping aluminium during the synthesis of the core particles. The core particles are in a form of secondary particles, wherein the secondary particles are each formed by agglomerating a plurality of primary particles (e.g., are each an agglomeration of a plurality of primary particles or are in the form of secondary particles, in each which a plurality of primary particles are agglomerated), and the aluminium content (e.g., amount) in the inner portion of the primary particles may be the same or similar regardless of the location of the primary particles. For example, if a primary particle is selected at a random position in the cross-section of a secondary particle and the aluminium content (e.g., amount) is measured in the inner portion of the primary particle rather than at its interface, regardless of the location of the primary particle, e.g., whether the primary particle is close to a centre of the secondary particle or close to a surface of the secondary particle, the aluminium content (e.g., amount) may be the same/similar/substantially uniform. In this structure, a stable layered structure may be maintained, even if cobalt is absent or is present in only a very small amount. Furthermore, aluminium by-products or aluminium aggregates may not be generated, so that the capacity, efficiency, and cycle-life characteristics of the positive electrode active material may be improved at the same time.

The layered lithium nickel-manganese-based composite oxide may be specifically represented by Chemical Formula 1:

**Chemical Formula 1** Liₐ₁Niₓ₁Mn_{y1}Al_{z1}M¹_{w1}O_{2-b1}X_{b1}

wherein, in Chemical Formula 1, 0.9≤a1≤1.8, 0.6≤x1≤0.8, 0.1≤y1≤0.4, 0≤z1≤0.03, 0 ≤w1≤0.3, 0.9≤x1 +y1 +z1 +w1 ≤ 1.1, and 0≤b1≤0.1, M¹ may be one or more elements selected from among boron (B), barium (Ba), calcium (Ca), cerium (Ce), chromium (Cr), iron (Fe), magnesium (Mg), molybdenum (Mo), niobium (Nb), silicon (Si), tin (Sn), strontium (Sr), titanium (Ti), vanadium (V), tungsten (W), yttrium (Y), zirconium (Zr), and zinc (Zn), and X is one or more elements selected from among fluorine (F), phosphorous (P), and sulfur (S).

For example, in Chemical Formula 1, 0.9≤a1≤1.5, or 0.9≤a1≤1.2. Additionally, Chemical Formula 1 may include aluminium, in which case 0.6≤x1≤0.8, 0.1≤y1≤0.39, 0.01≤z1≤0.03, and 0≤w1≤0.29, may be satisfied, or for example, 0.6≤ x1≤0.8, 0.1≤y1≤0.39, 0.01<z1≤0.03, and 0≤w1≤0.29 may be satisfied.

In Chemical Formula 1, for example, 0.6≤x1≤0.79, 0.6≤x1≤0.78, 0.6≤x1≤ 0.75, 0.65≤x1≤0.8, or 0.7≤x1≤0.79, 0.1≤y1≤0.35, 0.1≤y1≤0.30, 0.1≤y1≤0.29, 0.15≤ y1≤0.39, or 0.2≤y1≤0.3, 0.01≤z1≤0.025, 0.01<z1≤0.02, or 0.01<z1≤0.019, 0≤w1≤ 0.28, 0≤w1≤0.27, 0≤w1≤0.26, 0≤w1≤0.25, 0≤w1≤0.24, 0≤w1≤0.23, 0≤w1≤0.22, 0≤ w1≤0.21, 0≤w1≤0.2, 0≤w1≤0.15, 0≤w1≤0.1, or 0≤w1≤0.09.

The layered lithium nickel-manganese composite oxide may be a cobalt-free compound. For example, the cobalt-free compound may refer to a compound that does not include cobalt or includes a very small amount of cobalt. That is, in the context of this disclosure, unless specified otherwise, the term "cobalt-free" implies that cobalt is not intentionally added, chosen, or used as an element in the formula, composition, or compound. However, trace amounts of cobalt may still be present as a result of impurities or external factors, provided that these amounts are below a suitable level. In one or more embodiments, the layered lithium nickel-manganese composite oxide may have a cobalt content (e.g., amount) of less than or equal to about 0.01 mol%, less than or equal to about 0.005 mol%, less than or equal to about 0.001 mol%, for example, about 0 mol% to about 0.01 mol%, about 0 mol% to about 0.005 mol%, or about 0 mol% to about 0.001 mol% based on 100 mol% of a total metal excluding lithium.

The core particles are secondary particles formed by agglomerating a plurality of primary particles. The secondary particles may be spherical, elliptical, polyhedral, and/or irregular in shape, and the primary particles constituting the secondary particles may be spherical, elliptical, plate-shaped, and/or a (e.g., any suitable) combination thereof.

### Coating Layer

The positive electrode active material includes an aluminium coating layer that is located on the surface of the core particles, and a grain boundary coating portion that is located on the surface of the primary particles and includes cobalt.

The layered lithium nickel-manganese-based composite oxide may be susceptible to chemical attacks from components in an electrolyte. For example, if (e.g., when) a battery is operated under high-voltage or high-temperature conditions, which may render lots of side reactions with the electrolyte, it may result in increasing an amount of gas generation, thereby deteriorating battery cycle-life and safety, and these problems may be solved by introducing a coating layer according to one or more embodiments of the present disclosure.

The coating layer of the positive electrode active material includes aluminium, and may optionally further include a zirconium coating layer on the aluminium coating layer. In this regard, the content (e.g., amount) of the coating element based on 100 mol% of a total metal excluding lithium in the entire positive electrode active material may vary depending on the type or kind of coating element, for example, the content (e.g., amount) of the coating element may be about 0.01 mol% to about 5 mol%, about 0.05 mol% to about 3 mol%, or about 0.1 mol% to about 2 mol%.

The aluminium content (e.g., amount) of the aluminium coating layer may be about 0.1 mol% to about 3.0 mol%, about 0.1 mol% to about 2.0 mol%, about 0.5 mol% to about 1.5 mol%, or about 0.7 mol% to about 1.3 mol% based on 100 mol% of a total metal excluding lithium in the positive electrode active material. In one or more embodiments, the aluminium content (e.g., amount) of the aluminium coating layer may refer only to the content (e.g., amount) of aluminium contained in the aluminium coating layer, regardless of the aluminium included in the core particles. In one or more embodiments, if (e.g., when) the aluminium coating layer is introduced, the aluminium coating layer may include a layered aluminium compound, for example, aluminium oxide, lithium-aluminium oxide, and/or a (e.g., any suitable) combination thereof. For example, the aluminium coating layer may include LiAlO₂.

For example, if (e.g., when) a zirconium coating layer on the aluminium coating layer is introduced, the zirconium content (e.g., amount) of the zirconium coating layer may be about 0.1 mol% to about 1.5 mol%, about 0.1 mol% to about 1.0 mol%, about 0.1 mol% to about 0.5 mol%, or about 0.1 mol% to about 0.4 mol% based on 100 mol% of a total metal excluding lithium in the positive electrode active material. If (e.g., when) the contents of aluminium and/or zirconium in the coating layer satisfies the above ranges, the positive electrode active material may form a good or suitable coating layer without reducing capacity or increasing resistance, effectively suppressing or reducing side reactions with the electrolyte, and effectively reducing the amount of gas generated under high-voltage or high-temperature conditions.

According to one or more embodiments of the present disclosure, the aluminium coating layer may be in the form of a film that continuously surrounds the surface of the core particle, for example, in the form of a shell that surrounds the whole surface of the core particle. This is distinct from a coating structure in which a portion of the surface of the core particles is coated. According to one or more embodiments, the aluminium coating layer may be formed to entirely cover the surface of the core particles and have a very thin and substantially uniform thickness, which improves structural stability of the positive electrode active material without increasing resistance or deteriorating capacity, and while still effectively suppressing or reducing its side reaction with an electrolyte, and reducing a gas generation amount. That is, in certain embodiments, it is possible to create an aluminium coating that completely envelops the core particles with a consistently thin layer. This may enhance the positive electrode active material's structural integrity without raising resistance or compromising its capacity. Moreover, it may successfully minimize side reactions with the electrolyte, leading to a decrease in the amount of gas produced. As a result, the aluminium coating layer may lead to long cycle-life characteristics of the positive electrode active material under high voltage and high temperature conditions being achieved.

According to one or more embodiments of the present disclosure, the aluminium coating layer may have a thickness of about 10 nm to about 500 nm, about 10 nm to about 450 nm, about 10 nm to about 400 nm, about 10 nm to about 350 nm, about 10 nm to about 300 nm, about 10 nm to about 250 nm, about 10 nm to about 200 nm, about 10 nm to about 150 nm, about 10 nm to about 100 nm, about 10 nm to about 50 nm, about 20 nm to about 500 nm, about 30 nm to about 500 nm, or about 40 nm to about 500 nm. For example, the aluminium coating layer may have a thickness of less than or equal to about 40 nm. If (e.g., when) the aluminium coating layer satisfies the thickness ranges, the coating may neither increase resistance nor reduce capacity, and yet improve structural stability of the positive electrode active material and suppress or reduce its side reaction with an electrolyte. In one or more embodiments, the thickness of the aluminium coating layer may be, for example, measured by using SEM, TEM, time-of-flight secondary ion mass spectrometry (TOF-SIMS), X-ray photoelectron spectroscopy (XPS), or energy dispersive X-ray spectrometry (EDS), and/or the like, and the thickness ranges of the aluminium coating layer may be measured through TEM-EDS line profile.

According to one or more embodiments of the present disclosure, the aluminium coating layer may be thin and substantially uniform in thickness, at the level of tens to hundreds of nanometers. For example, a deviation in an aluminium coating layer thickness in one positive electrode active material particle may be less than or equal to about 20%, less than or equal to about 18%, or less than or equal to about 15%. As used herein, the deviation in the aluminium coating layer thickness may refer to the coating layer thickness within one positive electrode active material particle. For example, the deviation of the aluminium coating layer thickness may be calculated by measuring the thickness of about 10 points in an electron microscope image of the cross-section of a single positive electrode active material particle to calculate an arithmetic mean value of the thickness, and then dividing the absolute value of the difference between one measured data and the arithmetic mean value by the arithmetic mean value and multiplying by 100. When the deviation or standard deviation of the aluminium coating layer thickness satisfies the above range, it may mean that a coating layer of substantially uniform thickness may be formed in a form of a good or suitable film on the surface of the positive electrode active material particle. Accordingly, the structural stability of the positive electrode active material may be improved, side reactions with the electrolyte may be effectively suppressed or reduced, and the increase in resistance or decrease in capacity due to coating may be minimized or reduced.

In one or more embodiments, the aluminium coating layer may further include nickel, manganese, and/or a (e.g., any suitable) combination thereof in addition to aluminium. The nickel and manganese, which have already been contained in the core particles, may flow into the aluminium coating layer during the process of forming the aluminium coating layer, and each of nickel content and manganese content (e.g., amount) is not particularly limited. According to one or more embodiments of the present disclosure, the aluminium coating layer which necessarily contains aluminium and may optionally contain the nickel and manganese, may be formed to have a thin and substantially uniform thickness, and improve high voltage characteristics and cycle-life characteristics of the positive electrode active material.

In addition, according to one or more embodiments of the present disclosure, the aluminium coating layer may further contain sulfur in addition to the aluminium. The sulfur may be introduced during the process of adding the aluminium sulfate as an aluminium raw material, which is added for forming an aluminium coating layer, and a sulfur content (e.g., amount) is not particularly limited. The aluminium coating layer, which essentially contains aluminium and may optionally contain sulfur, may improve high voltage characteristics of the positive electrode active material and enhance cycle-life characteristics.

In contrast, in the process of forming the aluminium coating layer, aluminium may be diffused into the secondary particles. Accordingly, the positive electrode active material includes a grain boundary coating portion that may contain aluminium and may be located on the surface of (e.g., each of) the primary particles in an inner portion of (e.g., each of) the secondary particles. The inner portion of (e.g., each of) the secondary particles may refer to the entire interior of the (e.g., the respective one of the) secondary particles, except for the surface or a region of the secondary particle to about 60 length% of a radius of the (e.g., the respective one of the) secondary particles from the surface of the secondary particle in a centre direction. For example, the positive electrode active material may include a grain boundary coating composed of aluminium. This coating may be found on the surface of each primary particle within the interior of each secondary particle, and may extend throughout the entire inner region of each secondary particle, excluding the outer surface and up to about 60% of the radius from the surface towards the centre. The grain boundary coating portion may be distinguished from the coating layer on the surface of the secondary particle and refer to a coating portion formed on the surface of the primary particles in the inner portion of the secondary particles. For example, the grain boundary coating may be distinct from the outer coating layer of the secondary particles, and may be a coating found on the surface of the primary particles located within the secondary particles' interior. The grain boundary coating portion may be checked on a cross-section of the positive electrode active material through SEM-EDS analysis, and/or the like. The aluminium grain boundary coating portion may be formed to further structurally stabilize the positive electrode active material and improve cycle-life characteristics.

An aluminium content (e.g., amount) in the grain boundary coating portion may not be particularly limited, for example, the aluminium content (e.g., amount) of the grain boundary coating portion may be smaller than an aluminium content (e.g., amount) of the coating layer.

The positive electrode active material includes core particles in the form of secondary particles, wherein the secondary particles are formed by agglomerating a plurality of primary particles (e.g., are in the form of secondary particles, in each which a plurality of primary particles are agglomerated), and the grain boundary coating portion of the primary particles is positioned on the surface of the primary particles and contains cobalt. Because the positive electrode active material is prepared by coating aluminium on the surface of the core particles and then dry-coating cobalt on the surface of the core particles, in the positive electrode active material, the cobalt may be rarely present on the surface of the core particles but diffused into the inner portion of the core particles. If (e.g., when) the cobalt is doped, the cobalt may be uniformly (e.g., substantially uniformly) present in the inner portion of the primary particles, but in one or more embodiments, the positive electrode active material may have the characteristic that the cobalt is coated not in an inner portion of the primary particles but at grain boundaries of primary particles. For example, after forming LiAlO₂ on the surface of the core particles through aluminium coating and the cobalt dry coating, the cobalt may be diffused into the inner portion of the core particles and coated at the grain boundaries of the primary particles. Through these, cobalt may be coated on the surface of the primary particles, and aluminium may be coated on the surface of the secondary particles and modify the surface of the secondary particles, thereby improving capacity and cycle-life characteristics and reducing a gas generation amount at the high-temperature storage. As used herein, a cobalt content (e.g., amount) of the grain boundary coating portion may be about 0.1 mol% to about 5.0 mol%, about 0.5 mol% to about 4.0 mol%, about 1.0 mol% to about 3.0 mol%, or about 2.0 mol% to about 3.0 mol% based on about 100 mol% of a total metal excluding lithium in the positive electrode active material. If (e.g., when) the cobalt content (e.g., amount) of the grain boundary coating portion satisfies the ranges, cobalt may be diffused into the inner portion of the core particles to form a coating portion at the grain boundaries of the primary particles, which may effectively suppress or reduce a side reaction with an electrolyte and effectively reduce a gas generation amount under a high voltage or high temperature condition.

The surface of the core particle may not include (e.g., may exclude any) cobalt or may include a very small amount of cobalt, and the cobalt content (e.g., amount) may be less than or equal to about 0.01 mol%, less than or equal to about 0.005 mol%, less than or equal to about 0.001 mol%, for example, about 0 mol% to about 0.01 mol%, about 0 mol% to about 0.005 mol%, or about 0 mol% to about 0.001 mol% based on 100 mol% of a total metal excluding lithium in the positive electrode active material. For example, the coating layer on the surface of the core particle may not include (e.g., may exclude any) cobalt or may include a very small amount of cobalt, and cobalt may diffuse into the inner portion of the core particle and coat the grain boundaries of the primary particles.

According to one or more embodiments of the present disclosure, the average particle diameter (D₅₀) of the positive electrode active material may not be particularly limited, but may be, for example, about 10 micrometers (µm) to about 25 µm, about 11 µm to about 20 µm, or about 12 µm to about 18 µm. As used herein, if (e.g., when) a definition is not otherwise provided, the average particle diameter (D₅₀) may refer to a diameter of particles having a cumulative volume of 50 volume% in the particle size distribution that is obtained by measuring the size (diameter or major axis length) of about 20 particles at random in a scanning electron microscope image for positive electrode active materials. When the average particle diameter of the positive electrode active material satisfies the above range, high capacity and long cycle-life may be achieved, and it may be advantageous to form a coating layer according to one or more embodiments.

### Method of Preparing Positive Electrode Active Material

A method of preparing a positive electrode active material includes the steps of: (i) preparing core particles that include a lithium nickel-manganese-based composite oxide and are in a form of secondary particles, wherein the secondary particles are formed by agglomerating a plurality of primary particles (e.g., are in the form of secondary particles, in each which a plurality of primary particles are agglomerated); (ii) preparing an aluminium coating solution that includes an aqueous solvent and an aluminium raw material; (iii) adding the core particles to the aluminium coating solution, mixing them to form a first mixture, and then drying the first mixture to prepare a coated product; and (iv) dry-mixing the coated product and a cobalt raw material to form a second mixture, and performing heat treatment on the second mixture to obtain a positive electrode active material.

According to one or more embodiments of the present disclosure, in the method of preparing a positive electrode active material, step (i) (e.g., act (i) or task (i)) may include (a) mixing a nickel-manganese-based composite hydroxide and a lithium raw material, and (b) performing a first heat treatment. The nickel-manganese-based composite hydroxide, which is a precursor of the core particles, may contain no cobalt or include cobalt in a very small amount and may be, for example, a cobalt-free nickel-manganese-based composite hydroxide. The nickel-manganese-based composite hydroxide may be prepared in a general co-precipitation method.

The nickel-manganese-based composite hydroxide may have a nickel content (e.g., amount) of about 60 mol% to about 80 mol%, about 65 mol% to about 80 mol%, about 70 mol% to about 80 mol%, about 60 mol% to about 79 mol%, about 60 mol% to about 78 mol%, or about 60 mol% to about 75 mol% based on about 100 mol% of the total metal in the positive electrode active material. If (e.g., when) the nickel content (e.g., amount) satisfies the ranges, high capacity may be achieved, and even if the cobalt content (e.g., amount) is reduced, structural stability may be increased.

The nickel-manganese-based composite hydroxide may have a manganese content (e.g., amount) of about 10 mol%, about 10 mol% to about 40 mol%, about 15 mol% to about 35 mol%, about 15 mol% to about 30 mol%, or about 20 mol% to about 30 mol% based on about 100 mol% of the total metal in the positive electrode active material. If (e.g., when) the manganese content (e.g., amount) satisfies the ranges, high capacity may not only be achieved, but also structural stability of the positive electrode active material may be increased, and in addition, a production cost may be lowered, which may further increase economic feasibility.

In addition, the nickel-manganese-based composite hydroxide may further includes aluminium, and an aluminium content (e.g., amount) may be greater than or equal to about 0.1 mol%, greater than or equal to about 0.5 mol%, or greater than or equal to about 1 mol%, for example, about 1 mol% to about 3 mol%, about 1 mol% to about 2.5 mol%, about 1 mol% to about 2 mol%, or about 1 mol% to about 1.9 mol% based on about 100 mol% of the total metal in the positive electrode active material. In the nickel-manganese-based composite hydroxide, if (e.g., when) the aluminium content (e.g., amount) satisfies the ranges, high capacity may not only be achieved, but also structural stability of the positive electrode active material may be increased, and in addition, a production cost may be lowered, which may further increase economic feasibility.

According to one or more embodiments of the present disclosure, the method of preparing a positive electrode active material may not additionally dope aluminium in manufacturing the core particles, but use an aluminium raw material in manufacturing a precursor to use a nickel-manganese-aluminium-based composite hydroxide in which aluminium is evenly dispersed inside the structure as the precursor. If (e.g., when) such a precursor is used, a positive electrode active material, that is capable of stably maintaining a layered structure despite repeated charging and discharging without cobalt, may be manufactured. In such a process of preparing a positive electrode active material, aluminium byproducts or aluminium agglomerates may not be formed, thereby improving capacity and efficiency characteristics of the positive electrode active material and cycle-life characteristics of lithium batteries including the positive electrode active material.

In the nickel-manganese-based composite hydroxide, the cobalt content (e.g., amount) based on 100 mol% of the total metal may be less than or equal to about 0.01 mol%, less than or equal to about 0.005 mol%, or less than or equal to about 0.001 mol%, for example about 0 mol% to about 0.01 mol%, about 0 mol% to about 0.005 mol%, or about 0 mol% to about 0.001 mol%. This nickel-manganese composite hydroxide may be economical as it avoids the increase in unit cost caused by cobalt, maximizes capacity, and improves structural stability.

For example, the nickel-manganese-based composite hydroxide may be represented by Chemical Formula 2:

**Chemical Formula 2** Niₓ₂Mn_{y2}Al_{z2}M²_{w2}(OH)₂

wherein, in Chemical Formula 2, 0.6≤x2≤0.8, 0.1≤y2≤0.4 0≤z2≤0.03, 0≤w2≤0.3, and 0.9≤x2+y2+z2+w2≤1.1, M² is one or more element selected from among B, Ba, Ca, Ce, Cr, Fe, Mg, Mo, Nb, Si, Sn, Sr, Ti, V, W, Y, Zr, and Zn.

In Chemical Formula 2, for example, 0.6≤x2≤0.8, 0.1≤y2≤0.39, 0.01≤z2≤ 0.03, and 0≤w2≤0.29.

The nickel-manganese-based composite hydroxide may be in a form of particles, and an average particle diameter (D₅₀) of the particles may be about 10 µm to about 25 µm, for example, about 11 µm to about 20 µm, or about 12 µm to about 18 µm.

The nickel-manganese-based composite hydroxide and the lithium raw material may be mixed in a molar ratio of about 1:0.9 to about 1:1.8, for example, about 1:0.9 to about 1:1.5 or about 1:1 to about 1:1.2.

The first heat treatment may progress under an oxygen atmosphere, for example, within a temperature range of about 750 °C to about 950 °C, or about 780 °C to about 900 °C, or about 810 °C to about 890 °C for about 2 hours to about 20 hours or about 4 hours to about 12 hours.

Through the first heat treatment, the lithium nickel-manganese-based composite oxide may be obtained. The obtained lithium nickel-manganese-based composite oxide may have a nickel content (e.g., amount) of about 60 mol% to about 80 mol%, a manganese content (e.g., amount) of greater than or equal to about 10 mol%, an aluminium content (e.g., amount) of about 0 mol% to about 3 mol%, and a cobalt content (e.g., amount) of about 0 mol% to about 0.01 mol%, which is a very small amount, based on about 100 mol% of the total metal excluding lithium. Because such a composite oxide may have significantly different residual lithium contents on the surface of core particles and different one or more suitable characteristics from oxides with a different composition, for example, lithium nickel-cobalt-manganese-based composite oxide, lithium nickel-cobalt-aluminium-based composite oxide, lithium cobalt-based oxide, and/or the like, it is impossible to form a satisfactory coating layer in the form of a substantially uniform film in an existing coating method.

Accordingly, in the method of preparing a positive electrode active material according to the invention, the steps (e.g., acts or tasks) (ii) and (iii) introduce a coating layer, which may be substantially uniform, into the positive electrode active material by mixing an aqueous solvent and an aluminium raw material to prepare an aluminium coating solution, in which salt may be completely dissolved through a salt-dissolution method, adding core particles to the aluminium coating solution and mixing them, and drying the mixed core particles and aluminium coating solution to proceed with coating and prepare a coated product.

The optional salt-dissolution method is a salt-dissolution wet coating method and a pre-emptive method of first dissolving salts of coating raw materials (e.g., the salt of the aluminium raw material) and then, adding the active material particles to a mixture of the salts of coating raw materials and the aqueous solvent. Through the salt-dissolution method, the coating layer may be successfully formed in the form of substantially uniform and thin film on a surface of the layered lithium nickel-manganese-based composite oxide. According to the coating method in one or more embodiments of the present disclosure, compared with a general dry method or a post-addition wet method, a coating element content (e.g., amount) may be further increased on a surface of the active material.

The aqueous solvent may include distilled water, an alcohol-based solvent, and/or a (e.g., any suitable) combination thereof. The aluminium raw material may be, for example, aluminium sulfate. The aluminium sulfate may be an optimal or suitable raw material for forming a substantially uniform aluminium coating layer on the layered lithium nickel-manganese-based composite oxide.

In the core particle(s), based on about 100 mol% of the total metal excluding lithium and aluminium of the aluminium raw material, an aluminium content (e.g., amount) of the aluminium raw material may be designed to be about 0.1 mol% to about 3.0 mol%, for example, about 0.1 mol% to about 2.0 mol%, about 0.5 mol% to about 1.5 mol%, about 0.7 mol% to about 1.3 mol%. The aluminium coating content (e.g., amount) may be designed within the ranges to form a coating layer with a substantially uniform and thin thickness of tens to hundreds of nanometers, thereby reducing a gas generation amount and high-capacity and improving long cycle-life characteristics of rechargeable lithium batteries manufactured under high-voltage or high-temperature driving conditions.

The mixing of the aluminium raw material with the aqueous solvent (e.g., preparing the aluminium coating solution) may be carried out for about 1 minute to about 60 minutes, for example, about 3 minutes to about 30 minutes, or about 5 minutes to about 10 minutes. In addition, the mixing of the aluminium raw material with the aqueous solvent may be performed at a speed of about 100 rpm to about 800 rpm, for example, about 200 rpm to about 600 rpm, or about 250 rpm to about 500 rpm. Through such mixing conditions, the aluminium raw material may be completely dissolved in the aqueous solvent to obtain a colorless transparent coating solution, and the coating solution may be used to effectively form a substantially uniform coating layer according to one or more embodiments. The coating solution, which is completed with the mixing, has, for example, a pH value of about 1.5 to about 4, for example, about 2.0 to about 3.5, about 2.5 to about 3.3, about 2.7 to about 3.3, or about 2.9 to about 3.2.

The addition of the core particles may be performed, while stirring the coating solution, to increase coating quality.

In addition, the time taken to add the core particles to the coating solution may be about 30 seconds to add about 500 grams (g) of the core particles to about 2 minutes to add about 500 g of the core particles, for example, about 30 seconds to add about 500 g of the core particles to about 1.5 minutes to add about 500 g of the core particles, or the like. The speed of adding the core particles may be appropriately or suitably adjusted to appropriately or suitably control a pH value of a supernatant after completing the coating, thereby effectively inducing formation of a substantially uniform coating layer according to one or more embodiments. For example, if (e.g., when) the speed of adding the core particles is too slow (e.g., slower than the above time ranges), a reaction speed for each particle may vary, which might render a failure in forming a substantially uniform coating layer. In addition, if the speed of adding the core particles is too fast (e.g., faster than the above time ranges), which cause the pH value to change too fast, a failure in forming a substantially uniform coating layer may also occur.

After adding all the core particles to the coating solution, the mixture (e.g., a mixture of the core particles and the coating solution) may be stirred for about 15 minutes to about 60 minutes, for example, about 20 minutes to about 50 minutes, or about 30 minutes to about 45 minutes. The time taken from adding the core particles to the coating solution to completing the stirring (e.g., coating reaction time) may be appropriately or suitably adjusted within about 1 hour.

In one or more embodiments of the present disclosure, if (e.g., when) the stirring is stopped after adding the core particles to the coating solution (e.g., mixing the core particles and the coating solution is completed), or if (e.g., when) the coating is completed (e.g., the coating layer formed on the core particles), a pH value of a supernatant may be within a range of about 5.5 to about 8.5. If (e.g., when) the pH value of the supernatant is less than about 5.5, acidity may become too strong to form a substantially uniform coating layer, but if the pH value is greater than about 8.5, basicity may also become too strong to form a substantially uniform coating layer.

After removing the aqueous solvent from the mixed solution (e.g., from the mixture of the core particles and the coating solution after the step (act) of stirring), the obtained product may be dried, for example, at about 40 °C to about 240 °C, about 100 °C to about 220 °C, or about 150 °C to about 200 °C, for example, under vacuum conditions. Under such conditions, a satisfactory coated product may be obtained.

After removing the aqueous solvent from the mixed solution, the obtained product (e.g., the coated product after the step (act) of drying is completed) is said to be a coated product. The coated product may include the core particles and a coating layer that is located on the surface of the core particles and contains aluminium. That is, once the aqueous solvent is removed from the mixed solution and the resulting product is fully dried, it is referred to as a coated product. This product includes the core particles that are enveloped by a coating layer on their surface, which includes aluminium. For example, the coating layer may include a fiber shape (e.g., in a form of fibers), a mesh shape, and/or a spider web shape. Such meshes may be formed continuously across the entire surface of the core particles. The mesh-shaped coating layer with a very thin and substantially uniform thickness may be around (e.g., surround) the core particles, thereby strengthening the surface of the positive electrode active material and enhancing structural stability, and furthermore improving high-temperature and high-voltage characteristics.

According to the present invention, the step (e.g., act or task) (iv) of the method of preparing a positive electrode active material is dry-mixing the coated product and a cobalt raw material, and performing a heat treatment to obtain a positive electrode active material (e.g., a product obtained after the step of dry-mixing). In the process of preparing the positive electrode active material, LiAlO₂ may be formed on the core particles through aluminium coating, and cobalt may be diffused into an inner portion of the core particles through dry coating and coated at grain boundaries of the primary particles. Accordingly, because cobalt may be coated on the surface of the primary particles, and aluminium is coated on the surface of the secondary particles to modify the surface(s), there may be effects of improving capacity and cycle-life characteristics of the positive electrode active material and reducing a gas generation amount at the high-temperature storage during the process of preparing the positive electrode active material. For example, as a result, with cobalt coating the surface of the primary particles and aluminium coating the surface of the secondary particles to alter their properties, it may be possible to observe enhancements in capacity and cycle-life performance, as well as a reduction in the amount of gas produced during high-temperature storage.

The cobalt raw material may be, for example, cobalt hydroxide (Co(OH)₂), cobalt oxide, and/or a (e.g., any suitable) combination thereof. In the step of dry-mixing the coated product with the cobalt raw material, a lithium raw material may be additionally mixed therewith, wherein the lithium raw material may be, for example, lithium hydroxide (LiOH).

In the core particles, based on about 100 mol% of a total of the total metal excluding lithium in the core particles and cobalt of the cobalt raw material, a cobalt content (e.g., amount) of the cobalt raw material may be designed to be about 0.1 mol% to about 5.0 mol%, for example, about 0.5 mol% to about 4.0 mol%, about 1.0 mol% to about 3.0 mol%, or about 2.0 mol% to about 3.0 mol%. The cobalt content (e.g., amount) may be designed within the above ranges, so that cobalt may be diffused into an inner portion of the core particles and coated at the grain boundaries of the primary particles, thereby improving cycle-life characteristics of the lithium batteries including the positive electrode active material under high-voltage or high-temperature driving conditions, and concurrently (e.g., simultaneously), increasing initial charging and discharging efficiency of the lithium batteries including the positive electrode active material.

In the step (e.g., act or task) (iv) of the method of preparing a positive electrode active material, during the step (act) of dry-mixing the coated product and the cobalt raw material, the lithium raw material and a zirconium raw material may be mixed together to proceed with zirconium coating. The zirconium raw material may be, for example, zirconium oxide (ZrO₂).

A zirconium content (e.g., amount) of the zirconium raw material may be designed to be about 0.01 mol% to about 1.5 mol%, for example, about 0.05 mol% to about 1.0 mol%, about 0.1 mol% to about 1.0 mol%, about 0.1 mol% to about 0.5 mol%, or about 0.1 mol% to about 0.4 mol% based on about 100 mol% of the total metal excluding lithium in the positive electrode active material. The zirconium coating content (e.g., amount) may be designed within the above ranges to form a coating layer with a substantially uniform and thin thickness of tens to hundreds of nanometers, thereby improving cycle-life characteristics of the lithium batteries including the positive electrode active material under high-voltage or high-temperature driving conditions, and concurrently (e.g., simultaneously), increasing charging and discharging efficiency of the lithium batteries including the positive electrode active material.

In one or more embodiments of the present disclosure, the aforementioned heat treatment after mixing the nickel-manganese-based composite hydroxide and the lithium raw material may be expressed as a first heat treatment, and a heat treatment of the coated product may be expressed as a second heat treatment. The second heat treatment may be understood to form a coating layer, for example, performed at about 700 °C to about 850 °C, about 750 °C to about 840 °C, or about 800 °C to about 830 °C for about 2 hours to about 20 hours or about 3 hours to about 10 hours under an oxygen atmosphere. If (e.g., when) the second heat treatment temperature is set within the above ranges, aluminium tends to be less diffused into the inner portion of the secondary particles and mainly remains on the surface of the secondary particles, and concurrently (e.g., simultaneously), be coated on the surface of the secondary particles in the form of a shell with a very thin substantially uniform thickness.

### Positive Electrode

According to the present invention, a positive electrode includes a positive electrode current collector and a positive electrode active material layer on the positive electrode current collector, wherein the positive electrode active material layer includes the aforementioned positive electrode active material. The positive electrode active material layer may further include other types (kinds) of positive electrode active materials in addition to the aforementioned positive electrode active material. Additionally, the positive electrode active material layer may optionally further include a binder, a conductive material (e.g., an electron conductor), and/or a (e.g., any suitable) combination thereof.

According to one or more embodiments, a loading level of the positive electrode active material layer may be about 10 mg/cm² to about 40 mg/cm², for example about 10 mg/cm² to about 30 about mg/cm², or about 10 mg/cm² to about 20 mg/cm². Additionally, a density of the positive electrode active material layer in the final compressed positive electrode may be about 3.3 g/cc to about 3.7 g/cc, for example about 3.3 g/cc to about 3.6 g/cc or about 3.4 g/cc to about 3.58 g/cc. When applying the positive electrode active material according to one or more embodiments, it may be advantageous to implement such a loading level and density of the positive electrode active material layer, and a positive electrode that satisfies the loading level and density of the positive electrode active material layer in the above range may be suitable for implementing a high-capacity, high-energy-density rechargeable lithium battery.

### Binder

The binder may improve binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but are not limited thereto.

### Conductive Material

The conductive material (e.g., an electron conductor) may be included to provide electrode (e.g., electron) conductivity, and any electrically conductive material may be used as the conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like, a metal-based material of a metal powder or a metal fiber including copper, nickel, aluminium, silver, and/or the like, a conductive polymer such as a polyphenylene derivative, and/or a (e.g., any suitable) mixture thereof.

Each content (e.g., amount) of the binder and the conductive material may be about 0.5 wt% to about 5 wt% based on 100 wt% of the positive electrode active material layer.

The positive electrode current collector may include Al foil, and/or the like, but the present disclosure is not limited thereto.

### Rechargeable Lithium Battery

The present invention also provides a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

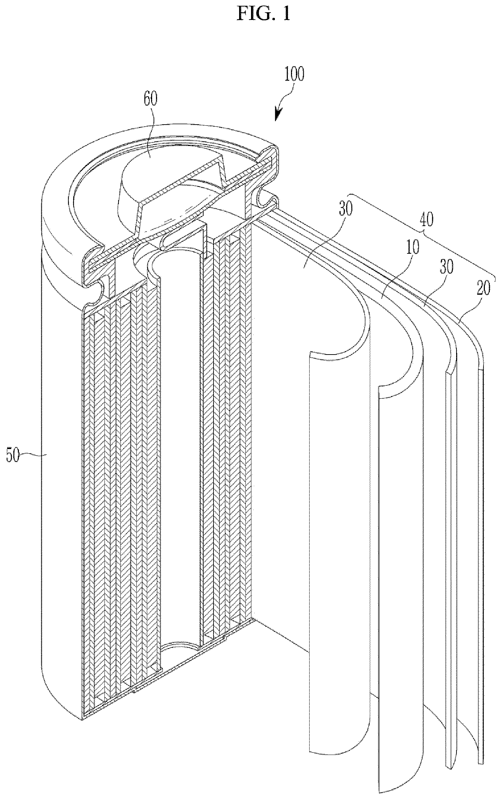

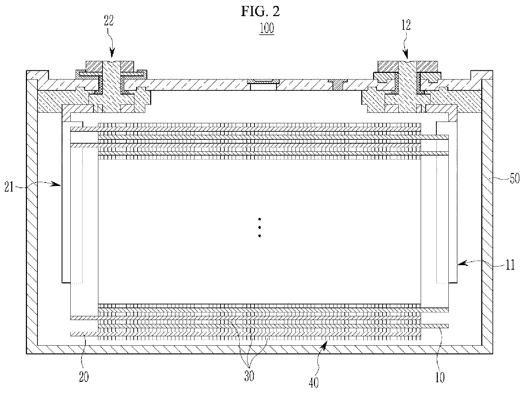

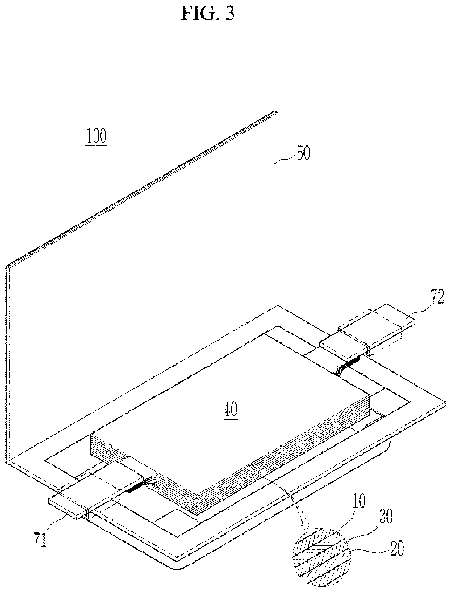

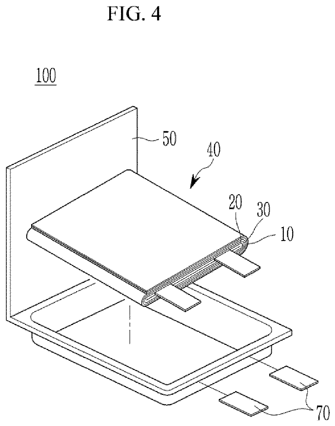

The rechargeable lithium battery may be classified into cylindrical, prismatic, pouch, coin, and/or the like. depending on the shape. FIGS. 1 to 4 are schematic views showing a rechargeable lithium battery according to one or more embodiments, where FIG. 1 is a cylindrical battery, FIG. 2 is a prismatic battery, and FIGS. 3 and 4 are each a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

A rechargeable lithium battery according to one or more embodiments may be appropriately or suitably charged or driven at a high voltage and exhibit improved characteristics under the high voltage condition.

For example, an upper limit voltage of the charging may be greater than or equal to about 4.45 V, for example, about 4.45 V to about 4.6 V, about 4.45 V to about 4.55 V, or about 4.45 V to about 4.50 V. A rechargeable lithium battery, to which the positive electrode active material of one or more embodiments is applied, if charged at a high voltage, may significantly reduce an amount of gas generated and achieve high-capacity and long cycle-life characteristics.

### Negative Electrode

The negative electrode may include a current collector and a negative electrode active material layer on the current collector, and the negative electrode active material layer may further include a negative electrode active material, a binder, a conductive material (e.g., an electron conductor), and/or a (e.g., any suitable) combination thereof.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include crystalline carbon, amorphous carbon, and/or a (e.g., any suitable) combination thereof as a carbon-based negative electrode active material. The crystalline carbon may be irregular, or sheet, flake, spherical, or fiber-shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), Mg, Ca, Sr, Si, antimony (Sb), lead (Pb), indium (In), Zn, Ba, radium (Ra), germanium (Ge), Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof, for example Mg, Ca, Sr, Ba, Ra, scandium (Sc), yttrium (Y), Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), copper (Cu), sliver (Ag), gold (Au), zinc (Zn), cadmium (Cd), B, Al, gallium (Ga), Sn, In, thallium (TI), Ge, P, arsenic (As), Sb, bismuth (Bi), S, selenium (Se), tellurium (Te), polonium (Po), and/or a (e.g., any suitable) combination thereof), and/or a (e.g., any suitable) combination thereof. A Sn-based negative electrode active material may be Sn, SnOx (0 < x ≤ 2), e.g., SnO₂, a Sn alloy, and/or a (e.g., any suitable) combination thereof.

A silicon-carbon composite may be a composite of silicon and amorphous carbon. An average particle diameter (D₅₀) of the silicon-carbon composite particles may be, for example, about 0.5 µm to about 20 µm. According to one or more embodiments, the silicon-carbon composite may be in the form of silicon particles and amorphous carbon that is coated on the surface of the silicon particles. For example, the silicon-carbon composite may include a secondary particle (core), wherein silicon primary particles are assembled in the secondary particle, and an amorphous carbon coating layer (shell) on a surface of the secondary particle. The amorphous carbon may also be present between the silicon primary particles, for example, the silicon primary particles may be coated with the amorphous carbon. The secondary particle may exist dispersed in an amorphous carbon matrix.

The silicon-carbon composite may further include crystalline carbon. For example, the silicon-carbon composite may include a core that includes the crystalline carbon and silicon particles, and an amorphous carbon coating layer on the surface of the core. The crystalline carbon may be artificial graphite, natural graphite, and/or a (e.g., any suitable) combination thereof. The amorphous carbon may include soft carbon or hard carbon, a mesophase pitch carbonized product, and/or calcined coke.

In one or more embodiments, when the silicon-carbon composite includes silicon and the amorphous carbon, a content (e.g., amount) of silicon may be about 10 wt% to about 50 wt% based on 100 wt% of the silicon-carbon composite, and a content (e.g., amount) of the amorphous carbon may be about 50 wt% to about 90 wt% based on 100 wt% of the silicon-carbon composite. In addition, if (e.g., when) the silicon-carbon composite includes silicon, the amorphous carbon, and the crystalline carbon, a content (e.g., amount) of silicon may be about 10 wt% to about 50 wt% based on 100 wt% of the silicon-carbon composite, a content (e.g., amount) of the crystalline carbon may be about 10 wt% to about 70 wt% based on 100 wt% of the silicon-carbon composite, and a content (e.g., amount) of the amorphous carbon may be about 20 wt% to about 40 wt% based on 100 wt% of the silicon-carbon composite.

Additionally, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, and/or in an oxidized form of silicon. The oxidized form of silicon may be represented by SiOₓ (0 < x ≤ 2) (e.g., SiO₂). In this regard, an atomic content (e.g., amount) ratio of Si:O, which may indicate a degree of oxidation of the oxidized form of silicon, may be about 99:1 to about 33:67. As used herein, if (e.g., when) a definition is not otherwise provided, an average particle diameter (D₅₀) may indicate a diameter of a particle where an accumulated volume is about 50 volume% in a particle size distribution of the silicon particles.

The Si-based negative electrode active material or the Sn-based negative electrode active material may be mixed with the carbon-based negative electrode active material. In one or more embodiments, when the Si-based negative electrode active material or the Sn-based negative electrode active material and the carbon-based negative electrode active material are mixed and used, the mixing ratio may be a weight ratio of about 1:99 to about 90:10.

### Binder

The binder serves to well adhere the negative electrode active material particles to each other, and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

In one or more embodiments, when an aqueous binder is used as the binder in the negative electrode active material layer, a cellulose-based compound capable of imparting viscosity may be further included. As the cellulose-based compound, one or more of carboxymethyl cellulose, hydroxypropylmethyl cellulose, methyl cellulose, and alkali metal salts thereof may be mixed and used. The alkali metal may be Na, K, or lithium (Li).

A dry binder may be a polymer material capable of becoming fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

### Conductive Material

The conductive material may be included to provide electrode conductivity, and any electrically conductive material may be used as the conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like, a metal-based material of a metal powder or a metal fiber including copper, nickel, aluminium, silver, and/or the like, a conductive polymer such as a polyphenylene derivative, and/or a (e.g., any suitable) mixture thereof.

A content (e.g., amount) of the negative electrode active material may be about 95 wt% to about 99.5 wt% based on 100 wt% of the negative electrode active material layer, and a content (e.g., amount) of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material based on 100 wt% of the negative electrode active material layer.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, sheet, and/or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous organic solvent and a lithium salt.

The non-aqueous organic solvent serves as a medium for transmitting ions that take part in the electrochemical reaction of a battery. The non-aqueous organic solvent may include carbonate-based solvent, ester-based solvent, ether-based solvent, ketone-based solvent, alcohol-based solvent, an aprotic solvent, and/or a (e.g., any suitable) combination thereof.

A carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. A ester-based solvent may include methyl acetate, ethyl acetate, n-propyl acetate, dimethyl acetate, methyl propionate, ethyl propionate, decanolide, mevalonolactone, valerolactone, caprolactone, and/or the like. A ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In addition, a ketone-based solvent may include cyclohexanone, and/or the like. A alcohol-based solvent may include ethanol, isopropyl alcohol, and/or the like, and an aprotic solvent may include nitriles such as R-CN (wherein R is a C2 to C20 linear, branched, and/or cyclic hydrocarbon group, a double bond, an aromatic ring, and/or an ether group, and/or the like), amides such as dimethylformamide, dioxolanes such as 1,3-dioxolane, 1,4-dioxolane, and/or the like, and/or sulfolanes, and/or the like.

The non-aqueous organic solvent may be used alone or in a mixture of two or more types (kinds), and if (e.g., when) two or more types (kinds) are used in the mixture, a mixing ratio may be appropriately or suitably adjusted according to the desired or suitable battery performance, which is widely suitable to those working in the field.

When using the carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, the carbonate-based solvent and the aromatic hydrocarbon-based organic solvent may be mixed and used in a volume ratio of about 1:1 to about 30:1.

The electrolyte solution may further include vinyl ethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and/or lithium bis(oxalato) borate (LiBOB).

A concentration of the lithium salt may be within a range of about 0.1 M to about 2.0 M. In one or more embodiments, when the concentration of the lithium salt is within the above range, the electrolyte solution has appropriate or suitable ionic conductivity and viscosity, and thus excellent or suitable performance may be achieved and lithium ions may move effectively.

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on a surface (e.g., one or both surfaces (e.g., opposite surfaces))of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (e.g., TEFLON^{®}), and/or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but the present disclosure is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described in more detail. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed in a molar ratio of 1:1.05, and then heat-treated in a first heat treatment step at 845 °C in an oxygen atmosphere for 8 hours to prepare a lithium nickel-manganese-based composite oxide in a form of secondary particles having a composition of Li_{1.05}Ni_{0.75}Mn_{0.23}Al_{0.02}O₂ and an average particle diameter (D₅₀) of about 14 µm.

A coating solution was prepared by adding aluminium sulfate to a distilled water solvent, and then stirring the mixture at about 350 rpm for about 5 minutes. It was confirmed that the salt was completely dissolved in the coating solution, which appeared colorless and transparent. While continuously stirring the coating solution, 500 g of the lithium nickel-manganese-based composite oxide was added thereto over a time period of 1.5 minutes, and then stirred for 25 minutes. Herein, an aluminium content (e.g., amount) in the aluminium sulfate was designed to be 1.0 mol% based on 100 mol% of a total metal excluding lithium in a positive electrode active material. After completing the stirring, a pH value of a supernatant thereof was 5.5. After removing the solvent from the mixed solution by using an aspirator and a filter press, a coated product was obtained by vacuum-drying at 190 °C.

The coated product was mixed with cobalt hydroxide (Co(OH)₂) and LiOH, and then heat-treated in a second heat treatment step at 825 °C for 8 hours in an oxygen atmosphere to prepare the positive electrode active material. Herein, a cobalt content (e.g., amount) of the cobalt hydroxide was designed to be 2.0 mol% based on 100 mol% of the total metal excluding lithium in the positive electrode active material.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare positive electrode active material layer slurry, and this positive electrode active material layer slurry was coated on an aluminium foil current collector, and then dried and compressed to manufacture a positive electrode.

The positive electrode was used with a lithium metal counter-electrode and an electrolyte to manufacture a half-cell in a common method. The separator used a polytetrafluoroethylene and an electrolyte prepared by dissolving 1 M LiPF₆ in a mixed solvent of ethylene carbonate and dimethyl carbonate in a volume ratio of 3:7.

### Example 2

A positive electrode active material and a rechargeable lithium battery cell were manufactured substantially in substantially the same manner as in Example 1, except that zirconium oxide, which was designed to have a zirconium content (e.g., amount) of 0.2 mol% based on 100 mol% of a total metal excluding lithium in the positive electrode active material, was mixed with the coated product, cobalt hydroxide (Co(OH)₂), and LiOH, wherein the cobalt content (e.g., amount) of the cobalt hydroxide was designed to 1.0 mol% based on 100 mol% of a total metal excluding lithium in the positive electrode active material.

### Example 3

A positive electrode active material and a rechargeable lithium battery cell were manufactured substantially in substantially the same manner as in Example 2, except that cobalt content (e.g., amount) of the cobalt hydroxide was designed to 2.0 mol% based on 100 mol% of a total metal excluding lithium in the positive electrode active material.

### Example 4

A positive electrode active material and a rechargeable lithium battery cell were manufactured substantially in substantially the same manner as in Example 2, except that cobalt content (e.g., amount) of the cobalt hydroxide was designed to 3.0 mol% based on 100 mol% of a total metal excluding lithium in the positive electrode active material.

### Comparative Example 1

A positive electrode active material and a rechargeable lithium battery cell were manufactured substantially in substantially the same manner as in Example 2, except that the coated product and zirconium oxide was heat-treated in the second heat treatment step without adding each of cobalt hydroxide (Co(OH)₂) and LiOH in preparing the positive electrode active material.

### Comparative Example 2

A positive electrode active material and a rechargeable lithium battery cell were manufactured substantially in substantially the same manner as in Example 1, except that in preparing the positive electrode active material, the coated product alone - without adding each of cobalt hydroxide (Co(OH)₂) and LiOH - was heat-treated in the second heat treatment step, and after adding aluminium oxide to the lithium nickel-manganese-based composite oxide, a dry coating, obtained by heat-treating the mixture at 600 °C for 5 hours, was adopted for the aluminium coating instead of the wet coating using a distilled water solvent and aluminium sulfate.

### Comparative Example 3

A positive electrode active material and a rechargeable lithium battery cell were manufactured substantially in substantially the same manner as in Comparative Example 2, except that in preparing the positive electrode active material, the aluminium content (e.g., amount) was designed to be 2.0 mol% based on 100 mol% of a total metal excluding lithium in the positive electrode active material by using the lithium nickel-manganese-based composite oxide having a composition of Li_{1.05}Ni_{0.75}Mn_{0.25}O₂, which was prepared by using Ni_{0.75}Mn_{0.25}(OH)₂, and additionally doping aluminium.

### Comparative Example 4

A positive electrode active material and a rechargeable lithium battery cell were manufactured substantially in substantially the same manner as in Comparative Example 3, except that the positive electrode active material was prepared by not proceeding with the aluminium coating, i.e. without an aluminium coating.

### Comparative Example 5

A positive electrode active material and a rechargeable lithium battery cell were manufactured substantially in substantially the same manner as in Comparative Example 4, except that the positive electrode active material was prepared without additionally doping aluminium.

The manufacturing methods of Examples 1 to 4 and Comparative Examples 1 to 5 are summarized and shown in Table 1.

**(Table 1)**

| | Precursor (Ni:Mn:Al) | Al doping (mol%) | Al coating (mol%) | Al coating method | Zr coating (mol%) | Co coating (mol%) |
|---|---|---|---|---|---|---|
| Example 1 | 75:23:02 | - | 1.0 | Wet | - | 2.0 |
| Example 2 | 75:23:02 | - | 1.0 | Wet | 0.2 | 1.0 |
| Example 3 | 75:23:02 | - | 1.0 | Wet | 0.2 | 2.0 |
| Example 4 | 75:23:02 | - | 1.0 | Wet | 0.2 | 3.0 |
| Comparative Example 1 | 75:23:02 | - | 1.0 | Wet | 0.2 | - |
| Comparative Example 2 | 75:23:02 | - | 1.0 | Dry | - | - |
| Comparative Example 3 | 75:25:0 | 2.0 | 1.0 | Dry | - | - |
| Comparative Example 4 | 75:25:0 | 2.0 | - | - | - | - |
| Comparative Example 5 | 75:25:0 | - | - | - | - | - |

### Evaluation Example 1: Cross-Sectional Observation of Positive Electrode Active Material

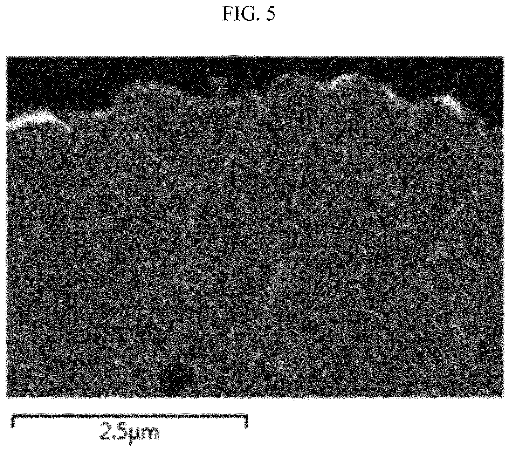

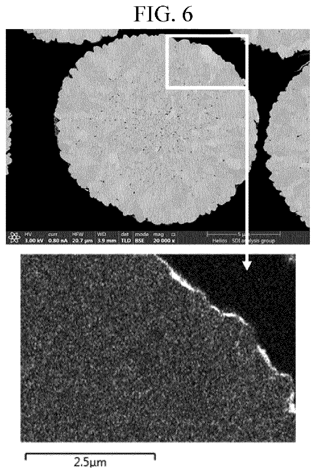

The positive electrode active material of Example 1 was checked with respect to the coating states of aluminium and cobalt through SEM-EDS mapping on a cross-section cut by a focused ion beam (FIB). FIGS. 5 and 6 are SEM-EDS images showing aluminium on the cross-section of the positive electrode active material of Example 1. Referring to FIGS. 5 and 6, an aluminium coating layer was formed as a substantially uniform film with a thickness of about 40 nm on the surface of the positive electrode active material, and aluminium was partially coated on the grain boundaries of the primary particles, which were boundaries of primary particles inside secondary particles.

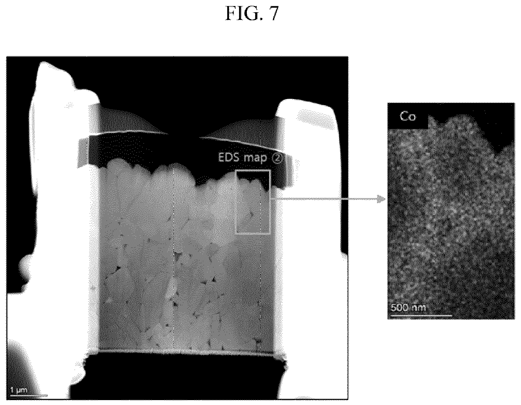

Additionally, FIG. 7 shows an SEM-EDS analysis image of mapping cobalt elements on the positive electrode active material cross-section of Example 1. Referring to FIG. 7, cobalt was not formed into a coating layer on the surface of the positive electrode active material, but was diffused into an inner portion of the secondary particles and was coated on the grain boundaries of the primary particles, which were the boundaries of the primary particles.

### Evaluation Example 2: Evaluation of Initial Charge/Discharge Capacity and Efficiency

The rechargeable lithium battery cells of Examples 1 to 4 and Comparative Examples 1 to 5 were charged to an upper limit voltage of 4.45 V at a constant current of 0.2 C and to 0.05 C at the constant voltage and then, discharged to a cut-off voltage of 3.0 V at 0.2 C at 25 °C to proceed with initial charging and discharging. In Table 2, initial charge capacity, initial discharge capacity, and a ratio of the latter to the former as efficiency are shown.

### Evaluation Example 3: Cycle-Life Characteristics

After the initial charging and discharging of Evaluation Example 2, the rechargeable lithium battery cells were 50 times or more charged at 1.0 C within a voltage range of 3.0 V to 4.45 V and discharged at 1.0 C at 45 °C to calculate a ratio of 50^{th} cycle discharge capacity to the initial discharge capacity, and the results are shown in Table 2.

### Evaluation Example 4: Evaluation of 80 °C Storage Gas Generation Amount

The rechargeable lithium battery cells of Examples 1 to 4 and Comparative Examples 1 to 5 were manufactured as 4.4 V 30 mAh cells and then, allowed to stand at 80 °C for 30 days, and then measured with respect to a gas generation amount (mL) at the 30^{th} days by using a gas analyzer (Refinery Gas Analysis; RGA); the results are shown in Table 2.

**(Table 2)**

| | 0.2 C initial charge capacity (mAh/g) | 0.2 C initial discharge capacity (mAh/g) | Efficiency (%) | Cycle-life (%, 45 °C, 50^{th}cyc) | Gas generation amount (mL/g) |
|---|---|---|---|---|---|
| Example 1 | 229.5 | 196.7 | 85.7 | 99.4 | 1.32 |
| Example 2 | 229.1 | 195.2 | 85.2 | 98.7 | 1.68 |
| Example 3 | 229.3 | 196.1 | 85.5 | 99.5 | 1.22 |
| Example 4 | 228.5 | 195.8 | 85.7 | 99.4 | 1.23 |
| Comparative Example 1 | 228.6 | 194.7 | 85.2 | 95.3 | 2.23 |
| Comparative Example 2 | 229.7 | 195.6 | 85.2 | 75.1 | 2.59 |
| Comparative Example 3 | 227.8 | 190.2 | 83.5 | 65.7 | 3.02 |
| Comparative Example 4 | 229.4 | 193.9 | 84.5 | 61.6 | 4.77 |
| Comparative Example 5 | 230.4 | 195 | 84.6 | 40.9 | 6.89 |

Referring to Table 2, Examples 1 to 4, in each of which cobalt dry coating was performed after aluminium wet coating, compared with Comparative Examples 1 to 5, in each of which the aluminium wet coating and/or the cobalt dry coating was not performed, exhibited improved efficiency and cycle-life characteristics and a reduced gas generation amount at the high-temperature storage. In particular, Examples 3 and 4, each of which had a cobalt content (e.g., amount) of 2 to 3 mol%, exhibited the highest positive (e.g., most excellent or suitable) effects in terms of cycle-life characteristics and a gas generation amount at the high-temperature storage.

Additionally, Comparative Examples 2 and 3, in each of which aluminium coating was performed through dry coating, compared with Comparative Example 1, in which the aluminium coating was performed through wet coating, exhibited inferior effects in terms of cycle-life characteristics and a gas generation amount at the high-temperature storage. Comparative Examples 4 and 5, in each of which the aluminium coating was not performed, compared with Comparative Examples 1 to 3, in each of which the aluminium coating was performed, exhibited inferior effects in terms of cycle-life characteristics and a gas generation amount at the high-temperature storage.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately", as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, ± 20%, ± 10%, or ± 5% of the stated value.

In the context of the present disclosure and unless otherwise defined, the terms "use", "using", and "used" may be considered synonymous with the terms "utilize", "utilizing", and "utilized", respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

A device of preparing a positive electrode active material, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While the present disclosure has been described in connection with what is presently considered to be practical example embodiments, it is to be understood that present disclosure is not limited to the disclosed embodiments. In contrast, it is intended to cover one or more suitable modifications and equivalent arrangements included within the scope of the appended claims and equivalents thereof.

Embodiments are set out in the following clauses:
Clause 1. A positive electrode active material, comprising: (a) a plurality of core particles comprising a lithium nickel-manganese-based composite oxide and being in a form of secondary particles, wherein each of the secondary particles comprises an agglomeration of a plurality of primary particles, (b) an aluminium coating layer on a surface of the core particles, and (c) a grain boundary coating portion on the surface of the primary particles and comprising cobalt.
Clause 2. The positive electrode active material of Clause 1, wherein the lithium nickel-manganese-based composite oxide comprises a nickel content of about 60 mol% to about 80 mol% based on 100 mol% of a total metal excluding lithium and a manganese content of greater than or equal to about 15 mol% based on 100 mol% of a total metal excluding lithium.
Clause 3. The positive electrode active material of Clause 1 or Clause 2, wherein the lithium nickel-manganese-based composite oxide further comprises aluminium, and an aluminium content is about 1 mol% to about 3 mol% based on 100 mol% of a total metal excluding lithium in the lithium nickel-manganese-based composite oxide.
Clause 4. The positive electrode active material of Clause 3, wherein a concentration of the aluminium is uniform in the lithium nickel-manganese-based composite oxide.
Clause 5. The positive electrode active material of any preceding Clause, wherein a cobalt content is at most about 0.01 mol% based on 100 mol% of a total metal excluding lithium in the lithium nickel-manganese-based composite oxide.
Clause 6. The positive electrode active material of any preceding Clause, wherein the lithium nickel-manganese-based composite oxide is represented by Chemical Formula 1:

   Chemical Formula 1 Liₐ₁Niₓ₁Mn_{y1}Al_{z1}M¹_{w1}O_{2-b1}X_{b1}

   in Chemical Formula 1, 0.9≤a1≤1.8, 0.6≤x1≤0.8, 0.1≤y1≤0.4, 0≤z1≤0.03, 0≤w1≤0.3, 0.9≤x1+y1+z1+w1≤1.1, and 0≤b1≤0.1, M¹ being one or more elements selected from among B, Ba, Ca, Ce, Cr, Fe, Mg, Mo, Nb, Si, Sn, Sr, Ti, V, W, Y, Zr, and Zn, and X being one or more elements selected from among F, P, and S.
Clause 7. The positive electrode active material of any preceding Clause, wherein an aluminium content of the aluminium coating layer is about 0.1 mol% to about 3.0 mol% based on 100 mol% of a total metal excluding lithium in the positive electrode active material.
Clause 8. The positive electrode active material of any preceding Clause, wherein the positive electrode active material further comprises a zirconium coating layer on the aluminium coating layer.
Clause 9. The positive electrode active material of Clause 8, wherein a zirconium content of the zirconium coating layer is about 0.1 mol% to about 1.5 mol% based on 100 mol% of a total metal excluding lithium in the positive electrode active material.
Clause 10. The positive electrode active material of any preceding Clause, wherein the aluminium coating layer is in a form of a shell that continuously surrounds the surface of the core particles.
Clause 11. The positive electrode active material of any preceding Clause, wherein the aluminium coating layer has a thickness of about 10 nm to about 500 nm.
Clause 12. The positive electrode active material of any preceding Clause, wherein a cobalt content of the grain boundary coating portion is about 0.1 mol% to about 5.0 mol% based on 100 mol% of a total metal excluding lithium in the positive electrode active material.
Clause 13. The positive electrode active material of any preceding Clause, wherein a cobalt content on the surface of each of the core particles is at least about 0.01 mol% based on 100 mol% of a total metal excluding lithium in the positive electrode active material.
Clause 14. The positive electrode active material of any preceding Clause, wherein the positive electrode active material has an average particle diameter (D₅₀) of about 10 µm to about 25 µm.
Clause 15. A method, comprising: (i) preparing core particles comprising a lithium nickel-manganese-based composite oxide and being in a form of secondary particles, wherein the secondary particles are formed by agglomerating a plurality of primary particles, (ii) preparing an aluminium coating solution comprising an aqueous solvent and an aluminium raw material, (iii) adding the core particles to the aluminium coating solution, mixing the core particles and the aluminium solution, and drying the core particles and the aluminium solution to prepare a coated product, and (iv) dry-mixing the coated product and a cobalt raw material, and performing a heat treatment to the coated product and the cobalt raw material to obtain a positive electrode active material, wherein the method is a method of preparing a positive electrode active material.
Clause 16. The method of Clause 15, wherein an aluminium content of the aluminium raw material is about 0.1 mol% to about 3.0 mol% based on 100 mol% of a total metal excluding lithium in the positive electrode active material, and a cobalt content of the cobalt raw material is about 0.1 mol% to about 5.0 mol% based on 100 mol% of the total metal excluding lithium in the positive electrode active material.
Clause 17. The method of Clause 15 or Clause 16, wherein in the act (iv), the heat treatment is performed at a temperature range of about 700 °C to about 850 °C.
Clause 18. The method of any of Clauses 15 to 17, wherein a lithium raw material and a zirconium raw material are mixed together when dry-mixing the coated product and the cobalt raw material in the act (iv).
Clause 19. A positive electrode, comprising: a positive electrode current collector, and a positive electrode active material layer on the positive electrode current collector, wherein the positive electrode active material layer comprises a positive electrode active material of any of Clauses 1 to 14.
Clause 20. A rechargeable lithium battery, comprising: the positive electrode of Clause 19, a negative electrode, and an electrolyte.

### Reference Numerals

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
a plurality of core particles comprising a lithium nickel-manganese-based composite oxide and being in a form of secondary particles, wherein each of the secondary particles comprises an agglomeration of a plurality of primary particles,
an aluminium coating layer on a surface of the core particles, and
a grain boundary coating portion on the surface of the primary particles and comprising cobalt.

2. The positive electrode active material as claimed in claim 1, wherein
the lithium nickel-manganese-based composite oxide comprises a nickel content of about 60 mol% to about 80 mol% based on 100 mol% of a total metal excluding lithium and a manganese content of greater than or equal to about 15 mol% based on 100 mol% of a total metal excluding lithium, and/or wherein
the lithium nickel-manganese-based composite oxide further comprises aluminium, and an aluminium content is about 1 mol% to about 3 mol% based on 100 mol% of a total metal excluding lithium in the lithium nickel-manganese-based composite oxide, optionally wherein
a concentration of the aluminium is uniform in the lithium nickel-manganese-based composite oxide.

3. The positive electrode active material as claimed in claim 1 or claim 2, wherein
a cobalt content is at most about 0.01 mol% based on 100 mol% of a total metal excluding lithium in the lithium nickel-manganese-based composite oxide.

4. The positive electrode active material as claimed in any preceding claim, wherein
the lithium nickel-manganese-based composite oxide is represented by Chemical Formula 1:
Chemical Formula 1 Liₐ₁Niₓ₁Mny₁Alz₁M¹_{w1}O_{2-b1}X_{b1}
in Chemical Formula 1, 0.9≤a1≤1.8, 0.6≤x1≤0.8, 0.1≤y1≤0.4, 0≤z1≤0.03, 0≤ w1≤0.3, 0.9≤x1+y1+z1+w1≤1.1, and 0≤b1≤0.1, M¹ being one or more elements selected from among B, Ba, Ca, Ce, Cr, Fe, Mg, Mo, Nb, Si, Sn, Sr, Ti, V, W, Y, Zr, and Zn, and X being one or more elements selected from among F, P, and S.

5. The positive electrode active material as claimed in any preceding claim, wherein
an aluminium content of the aluminium coating layer is about 0.1 mol% to about 3.0 mol% based on 100 mol% of a total metal excluding lithium in the positive electrode active material.

6. The positive electrode active material as claimed in any preceding claim, wherein
the positive electrode active material further comprises a zirconium coating layer on the aluminium coating layer, optionally wherein
a zirconium content of the zirconium coating layer is about 0.1 mol% to about 1.5 mol% based on 100 mol% of a total metal excluding lithium in the positive electrode active material.

7. The positive electrode active material as claimed in any preceding claim, wherein
the aluminium coating layer is in a form of a shell that continuously surrounds the surface of the core particles, and/or wherein
the aluminium coating layer has a thickness of about 10 nm to about 500 nm.

8. The positive electrode active material as claimed in any preceding claim, wherein
a cobalt content of the grain boundary coating portion is about 0.1 mol% to about 5.0 mol% based on 100 mol% of a total metal excluding lithium in the positive electrode active material, and/or wherein
a cobalt content on the surface of each of the core particles is less than or equal to about 0.01 mol% based on 100 mol% of a total metal excluding lithium in the positive electrode active material.

9. The positive electrode active material as claimed in any preceding claim, wherein
the positive electrode active material has an average particle diameter (D₅₀) of about 10 µm to about 25 µm.

10. A method of preparing a positive electrode active material, comprising the steps of:
(i) preparing core particles comprising a lithium nickel-manganese-based composite oxide and being in a form of secondary particles, wherein the secondary particles are formed by agglomerating a plurality of primary particles,
(ii) preparing an aluminium coating solution comprising an aqueous solvent and an aluminium raw material,
(iii) adding the core particles to the aluminium coating solution, mixing the core particles and the aluminium coating solution, and drying the core particles and the aluminium solution to prepare a coated product, and
(iv) dry-mixing the coated product and a cobalt raw material, and performing a heat treatment to the coated product and the cobalt raw material to obtain a positive electrode active material.

11. The method as claimed in claim 10, wherein
an aluminium content of the aluminium raw material is about 0.1 mol% to about 3.0 mol% based on 100 mol% of a total metal excluding lithium in the core particle and aluminium of the aluminium raw material, and a cobalt content of the cobalt raw material is about 0.1 mol% to about 5.0 mol% based on 100 mol% of the total metal excluding lithium in the core particle and aluminium of the aluminium raw material.

12. The method as claimed in claim 10 or claim 11, wherein
in step (iv), the heat treatment is performed at a temperature range of about 700 °C to about 850 °C.

13. The method as claimed in any of claims 10 to 12, wherein
a lithium raw material and a zirconium raw material are mixed together when dry-mixing the coated product and the cobalt raw material in step (iv).

14. A positive electrode, comprising:
a positive electrode current collector, and
a positive electrode active material layer on the positive electrode current collector,
wherein the positive electrode active material layer comprises a positive electrode active material as claimed in any of claims 1 to 9.

15. A rechargeable lithium battery, comprising:
the positive electrode as claimed in claim 14,
a negative electrode, and
an electrolyte.
